# EUROPEAN PATENT APPLICATION

(11) **EP 4 838 457 A1**
(43) Date of publication of application: **11.11.2026**
(21) Application number: 25749149.8
(22) Date of filing: 23.01.2025
(51) Int. Cl.: G06T 5/50, G06T 7/73, G06V 20/56, G06T 5/80, G06T 3/18, G06F 3/14

(54) **LOOKUP TABLE-BASED DETECTED OBJECT DISPLAY DEVICE AND LOOKUP TABLE-BASED DETECTED OBJECT DISPLAY METHOD**

(30) Priority: 01.02.2024 KR 20240016116
(71) Applicant: HD Construction Equipment Co., Ltd., Seongnam-si, Gyeonggi-do 13553 (KR)
(72) Inventor: LEE, Sanghoon, Yongin-si, Gyeonggi-do 16892 (KR); JUNG, Joonyong, Seoul 07930 (KR)
(74) Representative: Isarpatent
(86) International application number: PCT/KR2025/001276
(87) International publication number: WO 2025/165062

(57) **Abstract**

Disclosed is a detected object display apparatus based on a lookup table, including a plurality of cameras installed at a preset position of a construction machine; and a processing device, and the processing device may be configured to obtain a plurality of images in correspondence with each of the plurality cameras, perform object detection based on deep learning with respect to each of the plurality of images, when detecting an object from at least one among the plurality of images, determine a center coordinate with respect to the detected object, coordinate-transform the center coordinate with respect to the detected object using a lookup table, generate ,a synthesized image by synthesizing the obtained plurality of images and display the synthesized image and a preset image such that the preset image is overlaid with the detected object in the synthesized image.

## Description

### [Technical Field]

The embodiments below relate to a detected object display apparatus based on a lookup table and a method for displaying a detected object based on a lookup table.

### [Background Art]

In general, in an environment of earthwork, construction machines such as a dozer, a loader, an excavator, a grader, a dump truck, an articulated hauler and the like are mainly used. In particular, a dump truck of which a front frame and a rear frame are connected through a hinge and a direction change in left-right directions is performed through a steering cylinder is referred to as an articulated hauler.

If a general dump truck changes a direction by lifting a front wheel, because the articulated hauler changes a direction by turning a front area, the articulated hauler may easily move in a site with a narrow road by reducing a turning radius and thus, an efficient moving route may be secured.

The construction machine such as the articulated hauler is manufactured to be greater gradually because of reasons such as work efficiency and the like. Around the construction machine manufactured great, a problem occurs in that a blind area that an driver of the construction machine who got on a driver's seat of the construction machine cannot see is formed.

### [DISCLOSURE]

### [Technical Problem]

The present disclosure is conceived so as to solve the problem in the corresponding technical field as mentioned above, and an object of the present disclosure is to provide a detected object display apparatus based on a lookup table capable of displaying a detected object and a preset object in a synthesized image generated by synthesizing a plurality of images and a method for displaying a detected object based on a lookup table.

In addition, another object of the present disclosure is to provide a detected object display apparatus based on a lookup table capable of coordinate-transforming a center coordinate determined with respect to an object detected from an image using a lookup table and a method for displaying a detected object based on a lookup table.

### [Technical Solution]

One embodiment is a detected object display apparatus based on a lookup table, including: a plurality of cameras installed at a preset position of a construction machine; and a processing device, and the processing device may be configured to: obtain a plurality of images in correspondence with each of the plurality cameras; perform object detection based on deep learning with respect to each of the plurality of images; when detecting an object from at least one among the plurality of images, determine a center coordinate with respect to the detected object; coordinate-transform the center coordinate with respect to the detected object using a lookup table; generate a synthesized image by synthesizing the obtained plurality of images; and display the synthesized image and a preset image such that the preset image is overlaid with the detected object in the synthesized image.

In addition, the processing device may generate a distortion-corrected image with respect to each of the plurality of images by performing distortion correction on each of the obtained plurality of images based on a preset correction value for distortion.

In addition, the processing device may generate a distortion-corrected image with respect to each of the plurality of images by performing distortion correction on each of the obtained plurality of images based on a preset correction value for distortion.

In addition, the processing device may coordinate-transform the determined center coordinate of the bounding box using the lookup table.

In addition, the processing device may generate the synthesized image by synthesizing a distortion-corrected image with respect to each of the plurality of images.

In addition, the processing device may display such that a preset image is overlaid with the detected object.

Another embodiment is a method for displaying a detected object based on a lookup table, including: from a plurality of cameras installed at a preset position of a construction machine, obtaining a plurality of images in correspondence with each of the plurality of cameras; performing object detection based on deep learning with respect to each of the plurality of images; when detecting an object from at least one among the plurality of images, determining a center coordinate with respect to the detected object; coordinate-transforming the center coordinate with respect to the detected object using a lookup table; generating a synthesized image by synthesizing the obtained plurality of images; and displaying the synthesized image and a preset image such that the preset image is overlaid with the detected object in the synthesized image.

In addition, the obtaining a plurality of images may include: generating a distortion-corrected image with respect to each of the plurality of images by performing distortion correction on each of the plurality of images based on a preset correction value for distortion.

In addition, the determining a center coordinate with respect to the detected object may include: obtaining a bounding box surrounding the detected object; and determining a center coordinate of the bounding box based on a top left coordinate and a lower right coordinate of the bounding box.

In addition, the coordinate-transforming the center coordinate with respect to the detected object using a lookup table may include: coordinate-transforming the determined center coordinate of the bounding box using the lookup table.

In addition, the displaying may include: generating the synthesized image by synthesizing a distortion-corrected image with respect to each of the plurality of images.

In addition, the displaying may further include: displaying such that a preset image is overlaid with the detected object.

### [Advantageous Effect]

According to an embodiment of the present disclosure, there is an effect of displaying a detected object and a preset object in a synthesized image generated by synthesizing a plurality of images.

In addition, there is an effect of coordinate-transforming a center coordinate determined with respect to an object detected from an image using a lookup table.

### [Brief Description of the Drawings]

FIG. 1 is a diagram illustrating configuration of a detected object display apparatus based on a lookup table according to an embodiment.
FIGS. 2a and 2b are views illustrating an appearance in which a camera included in a detected object display apparatus based on a lookup table is mounted in a construction machine according to an embodiment.
FIG. 3 is a view illustrating an appearance in which an object detected from an image is displayed in a synthesized image according to an embodiment.
FIG. 4 is a flowchart illustrating a method for displaying a detected object based on a lookup table according to an embodiment.

### [Description of Embodiments]

Descriptions of specific structures or functions relating to certain embodiments derived based on the concept of the present disclosure as set forth in the present specification are provided merely as examples for explaining the embodiments derived from the concept of the disclosure. The embodiments can be practiced in a variety of implementations and are not limited to the embodiments described herein.

Embodiments according to the inventive concept may have various modifications and various forms, so they are illustrated in the drawings and described in detail herein. However, this does not limit various embodiments of the inventive concept to a specific embodiment and it should be understood that the inventive concept covers all the modifications, equivalents, and/or replacements of the inventive concept provided they come within the scope of the appended claims and their equivalents.

It will be understood that the terms "first" and "second" are used herein to describe various components but these components should not be limited by these terms. The terms are used only for the purpose of distinguishing one component from another and for example, without departing from the scope of the invention concept, a first component may be referred to as a second component and similarly a second component may also be referred to as a first component.

When it is mentioned that a certain component is "coupled with" or "connected with" another component, it should be understood that the certain component is directly "coupled with" or "connected with" to the other component or a further component may be located therebetween. In contrast, when it is mentioned that a certain component is "directly coupled with" or "directly connected with" another component, it will be understood that a further component is not located therebetween. Other expressions that describe the relationship between components, such as "between" and "directly between" or "adjacent to" and "directly adjacent to", should be interpreted in the same manner.

In various embodiments of the inventive concept, terms used in this specification are used to describe specific embodiments, and are not intended to limit the scope of the inventive concept. The singular expressions include plural expressions unless the context clearly dictates otherwise.

It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms including technical and scientific terms used herein have the same meaning as commonly understood by one of ordinary skill in the art to which this inventive concept belongs.

It will be further understood that terms, such as those defined in commonly used dictionaries, should be interpreted as having a meaning that is consistent with their meaning in the context of the relevant art and will not be interpreted in an idealized or overly formal sense unless expressly so defined herein.

In the following description, like reference numerals designate like elements having the same configuration and redundant description and description of a known technology will be omitted.

Hereinafter, the present disclosure will be described in detail by describing a preferable embodiment of the present disclosure with reference to the accompanying drawings.

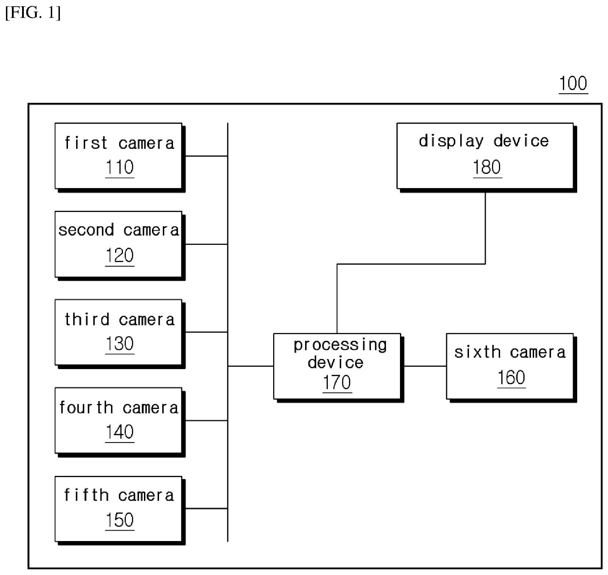

FIG. 1 is a diagram illustrating configuration of a detected object display apparatus based on a lookup table according to an embodiment.

A detected object display apparatus based on a lookup table 100 is a separate and independent device and may be combined with a construction machine.

The detected object display apparatus based on a lookup table 100 is a separate and independent device and may be communicatively connected to a construction machine.

The detected object display apparatus based on a lookup table 100 may be included into a construction machine.

Referring to FIG. 1, the detected object display apparatus based on a lookup table 100 includes a first camera 110, a second camera 120, a third camera 130, a fourth camera 140, a fifth camera 150, a sixth camera 160, a processing device, and a display device 180.

The first camera 110, the second camera 120, the third camera 130, the fourth camera 140, the fifth camera 150, the sixth camera 160, the processing device, and the display device 180 included in the detected object display apparatus based on a lookup table 100 are mutually connected and mutual data transmission thereamong is possible.

The first camera 110 may be installed at an upper side of the driver's seat of a construction machine (e.g., an articulated hauler and the like).

The first camera 110 may be installed at an upper side of the driver's seat above a head of an driver got on a driver's seat of a construction machine (e.g., an articulated hauler and the like).

The first camera 110 may be installed on an upper side of the driver's seat of a construction machine (e.g., an articulated hauler and the like) so that a direction thereof coincides with a viewing direction of the driver got on the driver's seat of a construction machine (e.g., an articulated hauler and the like).

The first camera 110 may generate a first image in correspondence with an eyesight of the driver got on the driver's seat of a construction machine (e.g., an articulated hauler and the like).

The second camera 120 may be installed at a front bumper of a construction machine (e.g., an articulated hauler and the like).

The second camera 120 may be installed at a front bumper of a construction machine (e.g., an articulated hauler and the like) such that the second camera 120 has a preset angle (e.g., 45 degrees and the like). Here, the preset angle is an angle which may be changed in consideration of a shape, a size and the like of a construction machine.

The second camera 120 may be installed at a front bumper of a construction machine (e.g., an articulated hauler and the like) present in the same line as the first camera 110. As such, when the first camera 110 and the second camera 120 are positioned in the same line, because camera calibration is made easier and the cameras are disposed based on the same axis, camera parameter modelling may be made easy because there is a physical reference coordinate.

The second camera 120 may generate a second image which corresponds to a forward-view image of a construction machine (e.g., an articulated hauler and the like).

The third camera 130 may be installed on an outside of a left side of a driver's seat of a construction machine (e.g., an articulated hauler and the like).

The third camera 130 may be installed on an outside of a left side of a driver's seat of a construction machine (e.g., an articulated hauler and the like) such that the third camera 130 is present in the same line as the first camera 110 and the fourth camera 140. As such, when the third camera 130 is positioned in the same line as the first camera 110 and the fourth camera 140, because camera calibration is made easier and the cameras are disposed based on the same axis, camera parameter modelling may be made easy because there is a physical reference coordinate.

The third camera 130 may generate a third image which corresponds to an outside-left view image of a driver's seat of a construction machine (e.g., an articulated hauler and the like).

The fourth camera 140 may be installed on an outside of a right side of a driver's seat of a construction machine (e.g., an articulated hauler and the like).

The fourth camera 140 may be installed on an outside of a right side of a driver's seat of a construction machine (e.g., an articulated hauler and the like) such that the fourth camera 140 may be present in the same line as the first camera 110 and the third camera 130. As such, when the fourth camera 140 is positioned in the same line as the first camera 110 and the second camera 130, because camera calibration is made easier and the cameras are disposed based on the same axis, camera parameter modelling may be made easy because there is a physical reference coordinate.

The fourth camera 140 may generate a fourth image which corresponds to an outside-right view image of a construction machine (e.g., an articulated hauler and the like).

The fifth camera 150 may be installed at a position at which a blind area of a construction machine can be shoot (e.g., when the construction machine is an articulated hauler, an outside of a cabin included in a front frame).

The fifth camera 150 may be installed perpendicular such that the fifth camera 150 may view a lower side from an upper side at a position at which the blind area (e.g., between a cabin included in the front frame of an articulated hauler and a dump included in a rear frame thereof) of a construction machine can be shoot.

The fifth camera 150 may generate a fifth image which corresponds to an image of a blind area (e.g., between a cabin included in the front frame of an articulated hauler and a dump included in a rear frame thereof) of a construction machine.

The sixth camera 160 may be installed at a rear of a construction machine (e.g., when the construction machine is an articulated hauler, a dump included in a rear frame and the like).

The sixth camera 160 may be installed at a position at which a lower side of a rear of a construction machine (e.g., when the construction machine is an articulated hauler, a lower side of a dump included in a rear frame and the like) can be shoot.

The sixth camera 160 may generate a sixth image which corresponds to an image of a lower side of a rear of a construction machine.

The processing device 170 may obtain a first image generated by the first camera 110.

The processing device 170 may obtain a second image generated by the second camera 120.

The processing device 170 may obtain a third image generated by the third camera 130.

The processing device 170 may obtain a fourth image generated by the fourth camera 140.

The processing device 170 may obtain a fifth image generated by the fifth camera 150.

The processing device 170 may obtain a sixth image generated by the sixth camera 160.

The processing device 170 may distortion-correct each of the first to sixth images which corresponds to each of the first to sixth cameras obtained based on a preset correction value for distortion. Here, the correction value for distortion may be changed according to a 3D model implemented in advance for synthesizing the first to sixth images.

The processing device 170 may generate first to sixth distortion-corrected images obtained by correcting distortion from the first to sixth images.

The processing device 170 may perform object detection based on deep learning with respect to each of the first to sixth images.

The processing device 170 may perform object detection based on deep learning with respect to each of frames constituting the first to sixth images.

The processing device 170 may perform object detection based on deep learning using a bounding box with respect to each of frames constituting the first to sixth images.

The processing device 170 may perform object detection based on deep learning using a bounding box with respect to each of frames constituting the first to sixth images and detect an object (hereinafter, "an object") included in each of frames constituting the first to sixth images.

When an object is detected from one among the first to sixth images, the processing device 170 may determine a coordinate with respect to the object detected from an image in which the object is detected.

According to an embodiment, when the object is detected, the processing device 170 may set a bounding box such that the bounding box surrounds the detected object, obtain a top left coordinate (e.g., x1, y1 and the like) and a lower right coordinate (e.g., x2, y2 and the like) of the bounding box, and determine a center coordinate of the bounding box based on the top left coordinate and the lower right coordinate of the bounding box.

According to another embodiment, the processing device 170 may obtain a top right coordinate (e.g., x1, y2 and the like) and a lower left coordinate (e.g., x2, y1 and the like) of the bounding box, and determine a center coordinate of the bounding box based on the top right coordinate and the lower left coordinate of the bounding box.

The processing device 170 may determine the center coordinate of the bounding box to be a center coordinate of the detected object.

The processing device 170 may use a lookup table so as to minimize a load of a system-on-chip (SoC).

The processing device 170 may coordinate-transform a coordinate of an object detected from one among the first to sixth images using the lookup table.

The processing device 170 may coordinate-transform the determined center coordinate of the bounding box using the lookup table.

The processing device 170 may set a size of the table with respect to a resolution region of an output image. Here, the resolution of the output image may be 1280x720, however, the resolution of the output image is not limited thereto.

The processing device 170 may set a size of the table in consideration of the resolution region of the output image and precision of the output result.

The processing device 170 may transform the center coordinate of the bounding box using the lookup table so that the object detected from one among the first to sixth images can be displayed at a precise position of a synthesized image.

The processing device 170 may generate a synthesized image by synthesizing the first to sixth images.

The processing device 170 may generate a synthesized image by synthesizing the first to sixth distortion-corrected images.

The processing device 170 may generate a synthesized image by synthesizing the first to sixth distortion-corrected images based on a preset 3D model.

The processing device 170 may display the object detected from one among the first to sixth images in a synthesized image based on the center coordinate of the bounding box which has been coordinate-transformed using the lookup table.

The processing device 170 may display a preset image such that the preset image is overlaid with the object detected from one among the first to sixth images in the synthesized image.

According to an embodiment, the processing device 170 may display a preset image in the synthesized image such that a preset image is displayed in the center coordinate of the bounding box which has been coordinate-transformed using the lookup table. Here, the preset image may be a warning image, but the preset image is not limited thereto.

The processing device 170 may output a synthesized image in which the object detected from one among the first to sixth images is displayed using the display device 180.

The processing device 170 may output a synthesized image in which the object detected from one among the first to sixth images and a preset image overlaid with the detected object are displayed using the display device 180.

The display device 180 may be a display device provided in a driver's seat of a construction machine, a head-up display device (HUD), a head mounted display device (HMD), an image output device capable of outputting a synthesized image, but the display device 180 is not limited thereto.

The display device 180 may include a monitor, a touch screen, a mouse, an electronic pen, a microphone, a keyboard, a speaker, an earphone, a headphone, or a touch pad.

The display device 180 may obtain an input of a user.

The display device 180 may include a port (e.g., a USB port) for being connected to an external device.

The display device 180 may be provided integrally with the detected object display apparatus based on the lookup table.

The display device 180 may be provided separated from the detected object display apparatus based on the lookup table.

The display device 180 may be a separate device which will be communicatively connected to the detected object display apparatus based on the lookup table.

It will be apparent to those skilled in the art to which the present invention belongs that the term "device or module" as used herein refers to a logical unit of organization and not necessarily to physically distinct components.

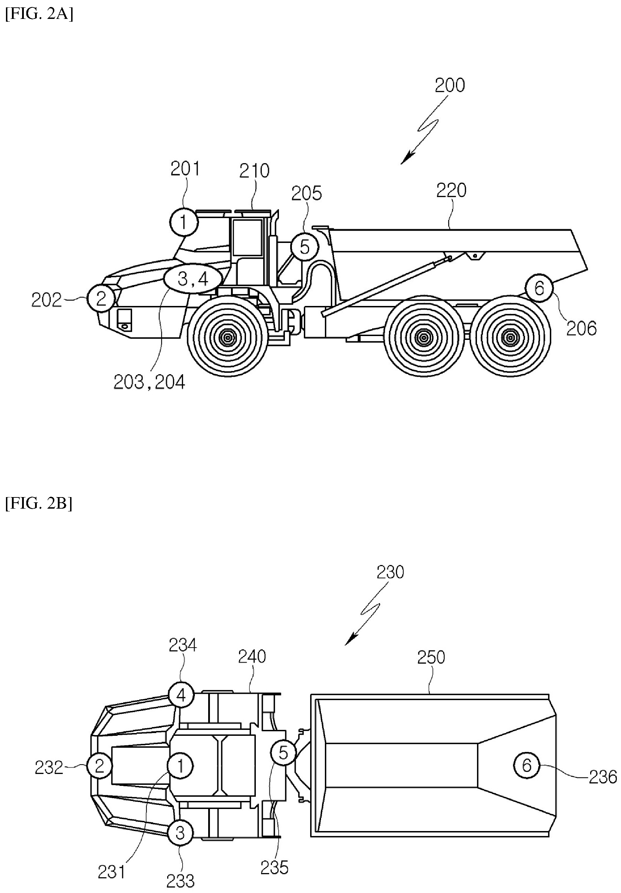

FIGS. 2a and 2b are views illustrating an appearance in which a camera included in a detected object display apparatus based on a lookup table is mounted in a construction machine according to an embodiment.

According to an embodiment, FIG. 2a illustrates a position at which a camera viewed from a side surface of a construction machine, and FIG. 2b illustrates a position at which a camera is mounted viewed from an upper surface of a construction machine.

Referring to FIGS. 2a and 2b, each of the plurality of cameras included in the detected object display apparatus based on the lookup table may be installed at a preset position of a construction machine.

The first camera 201 and 231 among the plurality of cameras included in the detected object display apparatus based on the lookup table may be installed on an upper side of a driver's seat of a construction machine (e.g., an articulated hauler and the like).

The first camera 201 and 231 among the plurality of cameras included in the detected object display apparatus based on the lookup table may be installed on an upper side of a driver's seat perpendicularly above a head of a driver got on the driver's seat of a construction machine (e.g., an articulated hauler and the like).

According to an embodiment, the first camera 201 and 231 may be installed on an upper side of a driver's seat of a construction machine (e.g., an articulated hauler and the like) such that the first cameras 201 and 231 are headed to the same direction as a direction of vision of a driver got on the driver's seat of a construction machine (e.g., an articulated hauler and the like).

The first cameras 201 and 231 may generate a first image which corresponds to eyesight of a driver got on the driver's seat of a construction machine (e.g., an articulated hauler and the like).

The second camera 202 and 232 among the plurality of cameras included in the detected object display apparatus based on the lookup table may be installed at a front bumper of a construction machine (e.g., an articulated hauler and the like).

According to an embodiment, the second cameras 202 and 232 may be installed at a front bumper of a construction machine (e.g., an articulated hauler and the like) such that the second cameras 202 and 232 have a preset angle (e.g., 45 degrees and the like). Here, the preset angle may be changed in consideration of a form, a size and the like of a construction machine.

In addition, the second cameras 202 and 232 may be installed at a front bumper of a construction machine (e.g., an articulated hauler and the like) present in the same line as the first cameras 201 and 231.

The second cameras 202 and 232 may generate the second image which corresponds to a forward-view image of a construction machine (e.g., an articulated hauler and the like).

The third camera 203 and 233 among the plurality of cameras included in the detected object display apparatus based on the lookup table may be installed on an outside of a left side of a driver's seat of a construction machine (e.g., an articulated hauler and the like).

According to an embodiment, the third cameras 203 and 233 may be installed on an outside of a left side of a driver's seat of a construction machine (e.g., an articulated hauler and the like) such that the third cameras 203 and 233 are present in the same line as the first cameras 201 and 231 and the fourth cameras 204 and 234.

The third cameras 203 and 233 may generate a third image which corresponds to an outside-left view image of a driver's seat of a construction machine (e.g., an articulated hauler and the like).

The fourth camera 204 and 234 among the plurality of cameras included in the detected object display apparatus based on the lookup table may be installed on an outside of a right side of a driver's seat of a construction machine (e.g., an articulated hauler and the like).

According to an embodiment, the fourth cameras 204 and 234 may be installed on an outside of a right side of a driver's seat of a construction machine (e.g., an articulated hauler and the like) such that the fourth cameras 204 and 234 are present in the same line as the first cameras 201 and 231 and the third cameras 203 and 233.

The fourth cameras 204 and 234 may generate the fourth image which corresponds to an outside-right view image of a construction machine (e.g., an articulated hauler and the like).

The fifth camera 205 and 235 among the plurality of cameras included in the detected object display apparatus based on the lookup table may be installed at a position at which a blind area of a construction machine can be shoot (e.g., when the construction machine is an articulated hauler, an outside of a cabin included in a front frame).

According to an embodiment, the fifth cameras 205 and 235 may be installed perpendicular such that the fifth cameras 205 and 235 may view a lower side from an upper side at a position at which the blind area (e.g., between a cabin included in the front frame of an articulated hauler and a dump included in a rear frame thereof) of a construction machine can be shoot.

The fifth cameras 205 and 235 may generate a fifth image which corresponds to an image of the blind area (e.g., between a cabin included in the front frame of an articulated hauler and a dump included in a rear frame thereof) of a construction machine.

The sixth camera 206 and 236 among the plurality of cameras included in the detected object display apparatus based on the lookup table may be installed at a rear of a construction machine (e.g., when the construction machine is an articulated hauler, a dump included in a rear frame and the like).

According to an embodiment, the sixth cameras 206 and 236 may be installed at a position at which a lower side of a rear of a construction machine (e.g., when the construction machine is an articulated hauler, a lower side of a dump included in a rear frame and the like) can be shoot.

The sixth cameras 206 and 236 may generate a sixth image which corresponds to an image of a lower side of a rear of a construction machine.

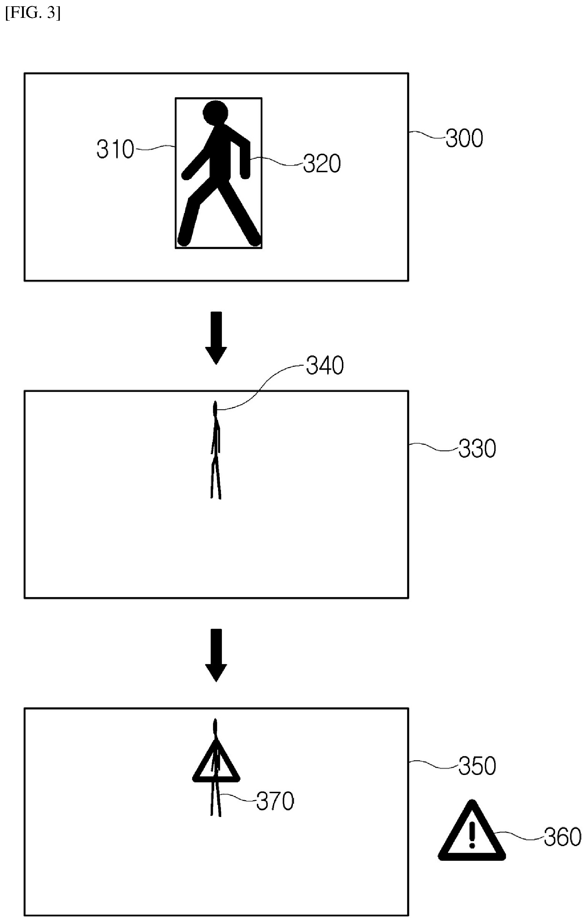

FIG. 3 is a view illustrating an appearance in which an object detected from an image is displayed in a synthesized image according to an embodiment.

Referring to FIG. 3, the detected object display apparatus based on the lookup table may obtain first to sixth image frames 300 which correspond to the first to sixth cameras, respectively, from the first camera to the sixth camera.

The detected object display apparatus based on the lookup table may perform object detection based on deep learning on each of the first to sixth images.

The detected object display apparatus based on the lookup table may perform object detection based on deep learning with respect to each of the frames 300 constituting the first to sixth images.

The detected object display apparatus based on the lookup table may perform object detection based on deep learning with respect to each of the frames 300 constituting the first to sixth images using the bounding box 310.

The detected object display apparatus based on the lookup table may detect an object 320 included in each of the frames 300 constituting the first to sixth images by performing object detection based on deep learning using the bounding box with respect to each of the frames 300 constituting the first to sixth images.

The detected object display apparatus based on the lookup table may perform distortion correction on each of the first to sixth images which corresponds to each of the first to sixth cameras obtained based on a preset correction value of distortion. Here, the correction value of distortion may be changed according to a 3D model implemented in advance so as to synthesize the first to sixth images.

The detected object display apparatus based on the lookup table may generate first to sixth distortion-corrected images obtained by correcting distortion from the first to sixth images**.**

When an object is included in an image 330 among the first to sixth distortion-corrected images from which distortion is corrected by the detected object display apparatus based on the lookup table, distortion of the object 340 may be corrected as well. In this case, visual recognition of the distortion-corrected object 340 may be much deteriorated.

The detected object display apparatus based on the lookup table may determine the center coordinate of the bounding box 310 based on the top left coordinate (e.g., x1, y1 and the like) and the lower right coordinate (e.g., x2, y2 and the like) of the bounding box 310 with respect to the obtained object.

The detected object display apparatus based on the lookup table may coordinate-transform the center coordinate of the bounding box using the lookup table such that the object detected from one among the first to sixth images is displayed at a precise position of the synthesized image.

The detected object display apparatus based on the lookup table may generate the synthesized image by synthesizing the first to sixth distortion-corrected images.

The detected object display apparatus based on the lookup table may display the object 340 detected from one among the first to sixth images in the synthesized image 330 based on the center coordinate of the bounding box 310 which has been coordinate-transformed using the lookup table.

The detected object display apparatus based on the lookup table may display the preset image 360 in the synthesized image 350 such that the preset image 360 is overlaid with the object 370 detected from one among the first to sixth images.

The detected object display apparatus based on the lookup table may display the synthesized image 350 including the preset image 360 such that the preset image 360 is displayed in the center coordinate of the bounding box 310 which has been coordinate-transformed using the lookup table.

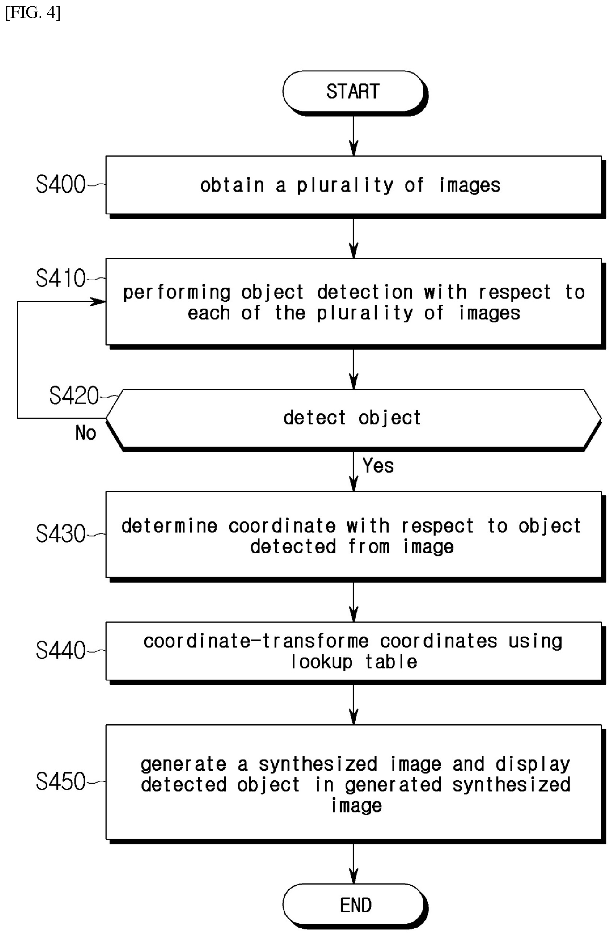

FIG. 4 is a flowchart illustrating a method for displaying the detected object based on the lookup table according to an embodiment.

Referring to FIG. 4, the method for displaying the detected object based on the lookup table according to an embodiment may include: from a plurality of cameras installed at a preset position of a construction machine, obtaining a plurality of images in correspondence with each of the plurality of cameras by the detected object display apparatus based on the lookup table (S400); performing object detection based on deep learning with respect to each of the plurality of images by the detected object display apparatus based on the lookup table (S410); determining whether to detect an object from at least one among the plurality of images by the detected object display apparatus based on the lookup table (S420); when detecting an object from at least one among the plurality of images, determining a coordinate with respect to the detected object by the detected object display apparatus based on the lookup table (S430); coordinate-transforming the coordinate with respect to the detected object using a lookup table by the detected object display apparatus based on the lookup table (S440); and generating a synthesized image by synthesizing the plurality of images obtained by the detected object display apparatus based on the lookup table and displaying the detected object in the synthesized image generated based on the coordinate transformation by the detected object display apparatus based on the lookup table (S450).

In the operation S400, the detected object display apparatus based on the lookup table may obtain the first to sixth images generated by the first tot sixth cameras.

The detected object display apparatus based on the lookup table may perform distortion-correction on each of the first to sixth images based on the preset correction value for distortion. Here, the correction value for distortion may be changed according to a 3D model implemented in advance so as to synthesize the first to sixth images.

The detected object display apparatus based on the lookup table may generate first to sixth distortion-corrected images obtained by correcting distortion from the first to sixth images.

In the operation S410, the detected object display apparatus based on the lookup table may perform object detection based on deep learning on each of the frames constituting the first to sixth images.

The detected object display apparatus based on the lookup table may perform object detection based on deep learning using the bounding box on each of the frames constituting the first to sixth images.

In the operation S420, the detected object display apparatus based on the lookup table may perform object detection based on deep learning using the bounding box on each of the frames constituting the first to sixth images, and when an object included in each of the frames constituting the first to sixth images is not detected, the detected object display apparatus based on the lookup table may go back to the operation S410 and perform object detection based on deep learning using the bounding box on each of the frames constituting the first to sixth images.

When the detected object display apparatus based on the lookup table performs object detection based on deep learning using the bounding box on each of the frames constituting the first to sixth images and an object included in each of the frames constituting the first to sixth images is detected, the detected object display apparatus based on the lookup table may perform the operation S430.

In the operation S430, the detected object display apparatus based on the lookup table may obtain the top left coordinate (e.g., x1, y1 and the like) and the lower right coordinate (e.g., x2, y2 and the like) of the bounding box 310 with respect to the obtained object.

The detected object display apparatus based on the lookup table may determine the center coordinate of the bounding box based on the top left coordinate and the lower right coordinate of the bounding box 310 with respect to the obtained object.

In the operation S440, the detected object display apparatus based on the lookup table may coordinate-transform the center coordinate of the bounding box determined using the lookup table.

In the operation S440, the detected object display apparatus based on the lookup table may coordinate-transform the center coordinate of the bounding box determined using the lookup table such that the object detected from one among the first to sixth images is displayed at a precise position in the synthesized image.

In the operation S450, the detected object display apparatus based on the lookup table may generate the synthesized image by synthesizing the first to sixth distortion-corrected images.

The detected object display apparatus based on the lookup table may display the object detected from one among the first to sixth images in the synthesized image based on the center coordinate of the bounding box which has been coordinate-transformed using the lookup table.

The detected object display apparatus based on the lookup table may display a preset image in the synthesized image such that the preset image is displayed in the center coordinate of the bounding box which has been coordinate-transformed using the lookup table. Here, the preset image may be a warning image, but the preset image is not limited thereto.

In the operation S450, the detected object display apparatus based on the lookup table may output a synthesized image in which the object detected from one among the first to sixth images and a preset image overlaid with the detected object are displayed using the display device 180.

Although components included in the implementation of the present disclosure are described as being combined to one, or as being operated to operate, the present disclosure is not necessarily limited to such an implementation, and these components may operate by being selectively combined to one or more within the purpose range of the present disclosure.

Further, although all of the components may be implemented as an independent hardware, a part or all of each of the components may be selectively combined to be implemented as a computer program that has a program module that performs a part or all of the function combined in one or a plurality of hardwares. The codes and the code segments that form the computer program will be easily deduced by those skilled in the art of the present disclosure.

Such a computer program can be stored in a computer readable media that a computer can read, and can be read and implemented by the computer to implement the implementation of the present disclosure. As the storage medium of the computer program, it may include a storage media including a semiconductor recording element, an optical recording media, and a magnetic recording media.

The term "comprises", "includes", or "has" described herein should be interpreted not to exclude other elements but to further include such other elements since the corresponding elements may be inherent unless mentioned otherwise.

All terms including technical or scientific terms have the same meanings as generally understood by a person having ordinary skill in the art to which the present disclosure pertains unless mentioned otherwise. Generally used terms, such as terms defined in a dictionary, should be interpreted to coincide with meanings in the related art from the context. Unless obviously defined in the present disclosure, such terms are not interpreted as having ideal or excessively formal meanings.

The description above is merely an illustrative description of the technical spirit of the present disclosure, and those of ordinary skill in the art to which the present disclosure pertains should be able to modify and change the present disclosure in various ways within a scope not departing from essential features of the present disclosure.

Consequently, the embodiments disclosed in the present disclosure are not limiting to the technical spirit of the present disclosure but describe the same, and the scope of the technical spirit of the present disclosure is not limited by the embodiments. The scope of the present disclosure should be construed by the claims below, and all technical ideas within the scope equivalent with the claims should be construed as belonging to the scope of the present disclosure.

## Claims

1. A detected object display apparatus based on a lookup table, comprising:
a plurality of cameras installed at a preset position of a construction machine; and
a processing device,
wherein the processing device is configured to:
obtain a plurality of images in correspondence with each of the plurality cameras;
perform object detection based on deep learning with respect to each of the plurality of images;
when detecting an object from at least one among the plurality of images, determine a center coordinate with respect to the detected object;
coordinate-transform the center coordinate with respect to the detected object using a lookup table;
generate a synthesized image by synthesizing the obtained plurality of images; and
display the synthesized image and a preset image such that the preset image is overlaid with the detected object in the synthesized image.

2. The detected object display apparatus based on a lookup table of claim 1,
wherein the processing device is further configured to generate a distortion-corrected image with respect to each of the plurality of images by performing distortion correction on each of the obtained plurality of images based on a preset correction value for distortion.

3. The detected object display apparatus based on a lookup table of claim 1,
wherein the processing device is further configured to:
obtain a bounding box surrounding the detected object, and
determine a center coordinate of the bounding box based on a top left coordinate and a lower right coordinate of the bounding box.

4. The detected object display apparatus based on a lookup table of claim 3,
wherein the processing device is further configured to coordinate-transform the determined center coordinate of the bounding box using the lookup table.

5. The detected object display apparatus based on a lookup table of claim 1,
wherein the processing device is further configured to generate the synthesized image by synthesizing a distortion-corrected image with respect to each of the plurality of images.

6. The detected object display apparatus based on a lookup table of claim 1,
wherein the processing device is further configured to display such that a preset image is overlaid with the detected object.

7. A method for displaying a detected object based on a lookup table, comprising:
from a plurality of cameras installed at a preset position of a construction machine, obtaining a plurality of images in correspondence with each of the plurality of cameras;
performing object detection based on deep learning with respect to each of the plurality of images;
when detecting an object from at least one among the plurality of images, determining a center coordinate with respect to the detected object;
coordinate-transforming the center coordinate with respect to the detected object using a lookup table;
generating a synthesized image by synthesizing the obtained plurality of images; and
displaying the synthesized image and a preset image such that the preset image is overlaid with the detected object in the synthesized image.

8. The method for displaying a detected object based on a lookup table of claim 7,
wherein the obtaining a plurality of images comprises:
generating a distortion-corrected image with respect to each of the plurality of images by performing distortion correction on each of the plurality of images based on a preset correction value for distortion.

9. The method for displaying a detected object based on a lookup table of claim 7,
wherein the determining a center coordinate with respect to the detected object comprises:
obtaining a bounding box surrounding the detected object; and
determining a center coordinate of the bounding box based on a top left coordinate and a lower right coordinate of the bounding box.

10. The method for displaying a detected object based on a lookup table of claim 9,
wherein the coordinate-transforming the center coordinate with respect to the detected object using a lookup table comprises:
coordinate-transforming the determined center coordinate of the bounding box using the lookup table.

11. The method for displaying a detected object based on a lookup table of claim 8,
wherein the displaying comprises:
generating the synthesized image by synthesizing a distortion-corrected image with respect to each of the plurality of images.

12. The method for displaying a detected object based on a lookup table of claim 7,
wherein the displaying further comprises:
displaying such that a preset image is overlaid with the detected object.
